(19)

**Europäisches Patentamt**
**European Patent Office**
**Office européen des brevets**

(11) **EP 4 554 225 A1**

(12) **EUROPEAN PATENT APPLICATION**
published in accordance with Art. 153(4) EPC

(43) Date of publication:
**14.05.2025 Bulletin 2025/20**

(21) Application number: **23835852.7**

(22) Date of filing: **06.07.2023**

(51) International Patent Classification (IPC):
*H04N 19/60* (2014.01)   *H04N 19/184* (2014.01)
*H04N 19/20* (2014.01)   *H04N 19/129* (2014.01)
*H04N 19/70* (2014.01)

(52) Cooperative Patent Classification (CPC):
**H04N 19/129; H04N 19/184; H04N 19/20;**
**H04N 19/60; H04N 19/70**

(86) International application number:
**PCT/KR2023/009552**

(87) International publication number:
**WO 2024/010386 (11.01.2024 Gazette 2024/02)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **06.07.2022 US 202263358853 P**
**13.10.2022 US 202263415663 P**

(71) Applicant: **LG Electronics Inc.**
**Yeongdeungpo-gu**
**Seoul 07336 (KR)**

(72) Inventors:
• **CHOI, Jangwon**
  **Seoul 06772 (KR)**
• **LIM, Jaehyun**
  **Seoul 06772 (KR)**
• **YOO, Sunmi**
  **Seoul 06772 (KR)**
• **CHOI, Jungah**
  **Seoul 06772 (KR)**
• **KIM, Seung Hwan**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **IMAGE ENCODING/DECODING METHOD BASED ON IMAGE TRANSFORM, METHOD FOR TRANSMITTING BITSTREAM, AND RECORDING MEDIUM ON WHICH BITSTREAM IS STORED**

(57)    An image encoding/decoding method, a bitstream transmission method, a computer-readable recording medium for storing a bitstream are provided. An image decoding method according to the present disclosure is an image decoding method performed by an image decoding device, and may comprise the steps of: reconstructing a picture from a bitstream; and transforming the reconstructed picture on the basis of one of at least one candidate transform, wherein the at least one candidate transform corresponds to a rotation transform or symmetric transform for the picture.

FIG. 10

EP 4 554 225 A1

## Description

### Technical Field

The present disclosure relates to an image encoding/decoding method, a method of transmitting a bitstream and a recording medium storing a bitstream, and relates to an image encoding/decoding method based on an image transform, a method of transmitting a bitstream and a recording medium storing a bitstream.

### Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### Disclosure

### Technical Problem

An object of the present disclosure is to provide an image encoding/decoding method and apparatus with improved encoding/decoding efficiency.

In addition, an object of the present disclosure is to propose an image pre-processing/post-processing method.

In addition, an object of the present disclosure is to propose an image pre-processing/post-processing method of coding tree units or coding units.

In addition, an object of the present disclosure is to propose a method of selecting an optimal pre-processing method from among various pre-processing methods.

In addition, an object of the present disclosure is to provide a non-transitory recording medium storing a bitstream generated by an image encoding method according to the present disclosure.

In addition, an object of the present disclosure is to provide a non-transitory recording medium storing a bitstream received, decoded and used to reconstruct an image by an image decoding apparatus according to the present disclosure.

In addition, an object of the present disclosure is to provide a method of transmitting a bitstream generated by an image encoding method according to the present disclosure.

The technical problems solved by the present disclosure are not limited to the above technical problems and other technical problems which are not described herein will become apparent to those skilled in the art from the following description.

### Technical Solution

An image decoding method according to an aspect of the present disclosure is an image decoding method performed by an image decoding apparatus. The image decoding method may comprise reconstructing a picture from a bitstream and transforming the reconstructed picture based on any one of at least one candidate transform. The at least one candidate transform may be a rotation transform or symmetry transform for the picture.

An image encoding method according to another aspect of the present disclosure is an image encoding method performed by an image encoding apparatus. The image encoding method may comprise transforming a picture based on any one of at least one candidate transform and encoding the transformed picture in a bitstream. The at least one candidate transform may be a rotation transform or symmetry transform for the picture.

Also, a computer-readable recording medium according to another aspect of the present disclosure may store a bitstream generated by an image encoding method or apparatus according to the present disclosure.

Also, a transmission method according to another aspect of the present disclosure may transmit a bitstream generated by an image encoding method or apparatus according to the present disclosure.

The features briefly summarized above with respect to the present disclosure are merely exemplary aspects of the detailed description below of the present disclosure, and do not limit the scope of the present disclosure.

### Advantageous Effects

According to the present disclosure, it is possible to provide an image encoding/decoding method and apparatus with improved encoding/decoding efficiency.

In addition, according to the present disclosure, an input image optimized for image encoding can be generated.

In addition, according to the present disclosure, encoding and decoding performance of prediction can be improved.

Also, according to the present disclosure, it is possible to provide a non-transitory recording medium storing a bitstream generated by an image encoding method according to the present disclosure.

Also, according to the present disclosure, it is possible to provide a non-transitory recording medium storing a bitstream received, decoded and used to reconstruct an image by an image decoding apparatus according to the present disclosure.

Also, according to the present disclosure, it is possible to provide a method of transmitting a bitstream generated by an image encoding method according to the present disclosure.

It will be appreciated by persons skilled in the art that that the effects that can be achieved through the present disclosure are not limited to what has been particularly described hereinabove and other advantages of the present disclosure will be more clearly understood from the detailed description.

## Description of Drawings

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an embodiment of the present disclosure is applicable.

FIG. 4 is a diagram showing a raster scan order.

FIG. 5 is a diagram schematically showing an example of pre-processing and post-processing of an image.

FIG. 6 is a flowchart illustrating an image encoding method according to an embodiment of the present disclosure.

FIG. 7 is a flowchart illustrating an image decoding method according to an embodiment of the present disclosure.

FIG. 8 is a diagram showing an example of a pre-processing method.

FIG. 9 is a flowchart illustrating an image encoding method according to another embodiment of the present disclosure.

FIG. 10 is a flowchart illustrating an image decoding method according to another embodiment of the present disclosure.

FIG. 11 is a flowchart illustrating an image encoding method according to another embodiment of the present disclosure.

FIG. 12 is a flowchart illustrating an image decoding method according to another embodiment of the present disclosure.

FIG. 13 is a diagram schematically showing another example of pre-processing and post-processing of an image.

FIG. 14 is a view showing a content streaming system, to which an embodiment of the present disclosure is applicable.

## Mode for Invention

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "picture" generally refers to a unit representing one image at a specific time, and a slice/tile is a coding unit constituting a portion of a picture, and a picture may be composed of one or more slices/tiles. In addition, a slice/tile may include one or more coding tree units (CTUs).

A "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. The unit may be used interchangeably with the terms such as "sample array", "block" or "area" in some cases. In a general case, an $M \times N$ block may include a set (or array) of samples (or a sample array) or transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

## Overview of video coding system

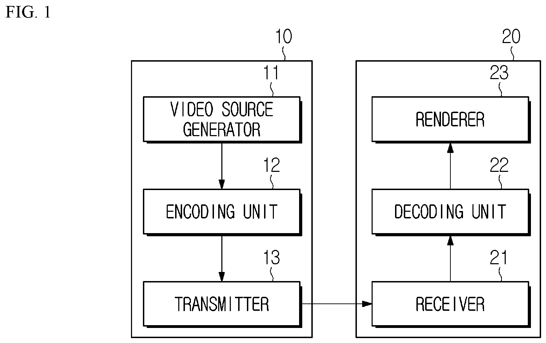

FIG. 1 is a view showing a video coding system to which an embodiment of the present disclosure is applicable.

The video coding system according to an embodiment may include an encoding device 10 and a decoding device 20. The encoding device 10 may deliver encoded video and/or image information or data to the decoding device 20 in the form of a file or streaming via a digital storage medium or network.

The encoding device 10 according to an embodiment may include a video source generator 11, an encoding unit(encoder) 12 and a transmitter 13. The decoding device 20 according to an embodiment may include a receiver 21, a decoding unit(decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 12, and in this case, the transmission device may include at least one processor that acquires encoded video/image information or data output in the form of a bitstream and a transmission unit for transmitting it in the form of a file or streaming. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

## Overview of image encoding apparatus

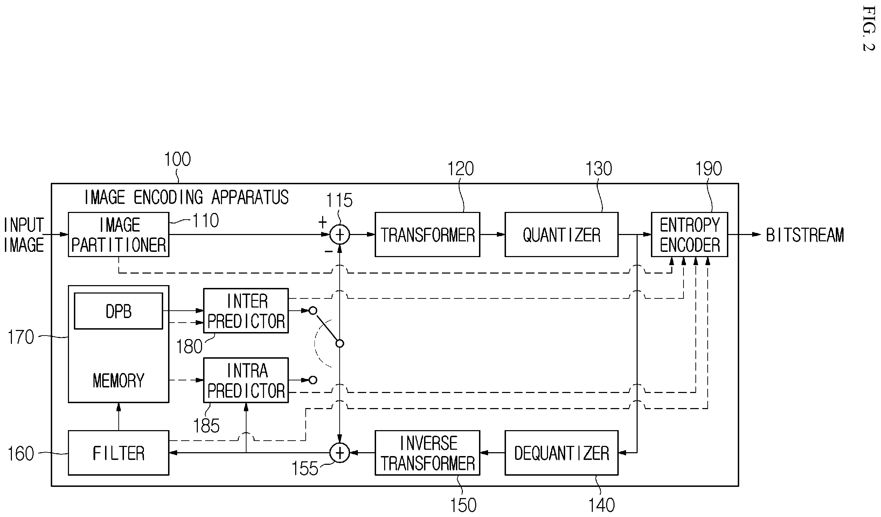

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

## Overview of image decoding apparatus

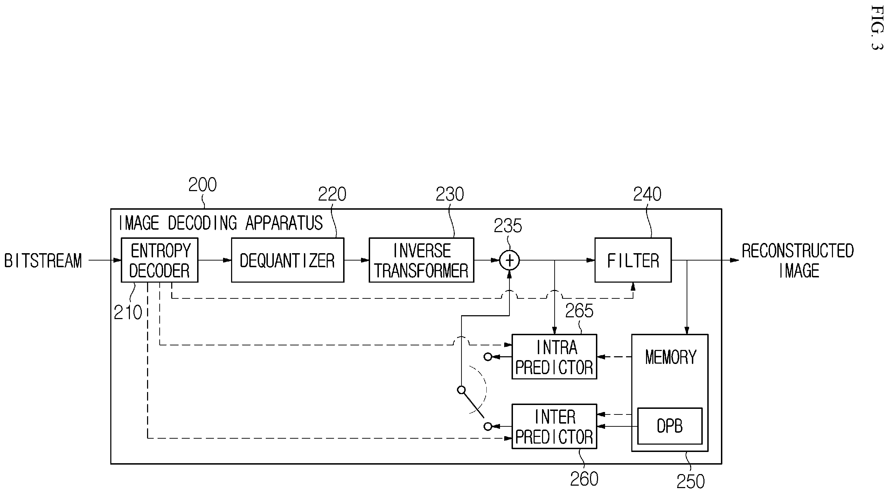

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter prediction unit 260 and an intra prediction unit 265. The inter prediction unit 260 and the intra prediction unit 265 may be collectively referred to as a "prediction unit". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter prediction unit 260, and the intra prediction unit 265 of the image decoding apparatus 200.

## Embodiment

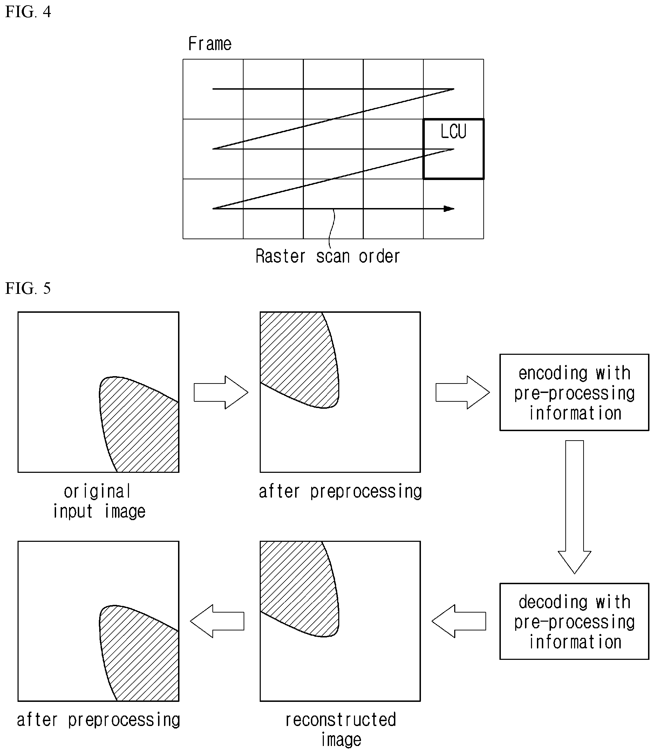

FIG. 4 is a diagram showing a raster scan order. As shown in FIG. 4, in existing video codecs, encoding and decoding of images are performed block by block in raster scan order starting from the top-left to bottom-right of the image.

Therefore, when encoding is performed using only intra information, like intra prediction, only pixel information of the top and left parts of a block to be encoded may be used, which causes a decrease in compression efficiency. In particular, when the bottom or right part of the image or block is complex, that is, when various objects are present in the bottom or right part of the image or block, or when there are many high-frequency components in the part, it is difficult to predict this using components of the top or left part of the image, so the efficiency of intra prediction may be further reduced.

The present disclosure proposes embodiments for generating and processing input images optimized for image encoding and decoding through pre-processing and post-processing of images or blocks. The embodiments described below may be performed in combination of two or more. In addition, 'pre-processing' may be referred to as 'transform', and 'post-processing' may be referred to as 'transform' or 'inverse transform'.

## Embodiment 1

Embodiment 1 relates to a method of improving compression efficiency of an image through pre-processing of an input image.

The pre-processing and post-processing methods proposed in Embodiment 1 may be performed in units of images, slices, tiles, subpictures, or sequences. In addition, the proposed pre-processing and post-processing methods may also be performed in units of CTUs or CUs. The 'image' mentioned below may correspond to any one of an image, a slice, a tile, a subpicture, a sequence, a CTU, or a CU. In other words, the pre-processing and post-processing methods may be performed in units of images, slices, tiles, subpictures, sequences, CTUs, or CUs. Transform information may be signaled as side information.

A schematic diagram illustrating an example of pre-processing and post-processing of an image is shown in FIG. 5.

Referring to FIG. 5, pre-processing is performed on an input image (original input image) to generate a preprocessed image (after pre-processing), and pre-processing information may be encoded. The pre-processing information is decoded, and a reconstructed image may be generated based on this, and post-processing is performed on the reconstructed image to generate a post-processed image (after post-processing).

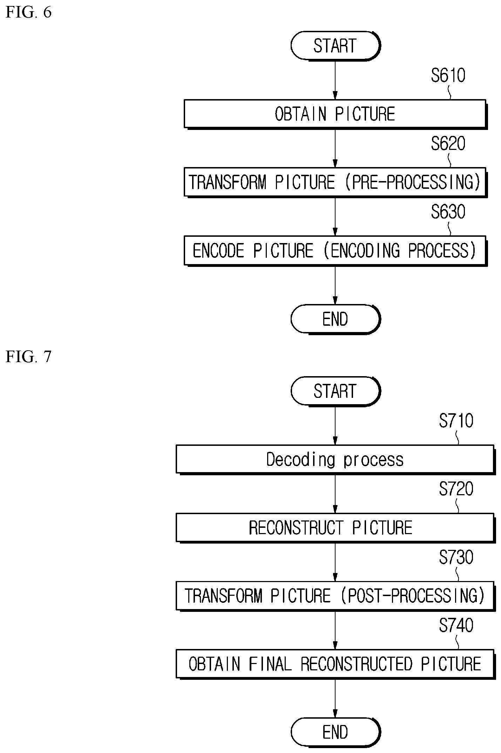

FIG. 6 is a flowchart illustrating an image encoding method according to an embodiment of the present disclosure, and FIG. 7 is a flowchart illustrating an image decoding method according to an embodiment of the present disclosure.

Referring to FIG. 6, the image encoding apparatus 100 may obtain a picture (input image) (S610) and perform picture transform (pre-processing) on the picture (S620). The transform may be performed based on any one of at least one candidate transform. The candidate transform may include at least one of a rotation transform, symmetry transform, or rotation and symmetry transform for the picture. The image encoding apparatus 100 may encode the transformed picture (S630). In this process, information on pre-processing, i.e., transform information, may also be encoded.

Referring to FIG. 7, the image decoding apparatus 200 may perform a decoding process on a bitstream to obtain information for picture reconstruction (S710), and reconstruct a picture based on the obtained information (S720).

The image decoding apparatus 200 may transform a picture based on any one of at least one candidate transform (S730). The process S730 may be a post-processing process. The candidate transform may include at least one of a rotation transform, symmetry transform, or rotation and symmetry transform for the picture. The transform process (S730) may be performed based on transform information obtained from the bitstream. In addition, the image decoding apparatus 200 may obtain a final reconstructed picture through the transform (S740).

Various transform methods (candidate transforms) such as Equations 1 to 6 may be used for pre-processing and post-processing.

[Equation 1]
$$input(x, y) = org(x, W - 1 - y)$$

[Equation 2]
$$input(x, y) = org(H - 1 - x, y)$$

[Equation 3]
$$input(x, y) = org(H - 1 - x, W - 1 - y)$$

[Equation 4]
$$input(x, y) = R * org(x, y), \qquad R = \begin{bmatrix} cos\theta & -sin\theta \\ sin\theta & cos\theta \end{bmatrix}$$

[Equation 5]
$$input(x, y) = R * org(x, W - 1 - y), \qquad R = \begin{bmatrix} cos\theta & -sin\theta \\ sin\theta & cos\theta \end{bmatrix}$$

[Equation 6]
$$input(x, y) = R * org(H - 1 - x, y), \qquad R = \begin{bmatrix} cos\theta & -sin\theta \\ sin\theta & cos\theta \end{bmatrix}$$

In Equations 1 to 6, (x, y) may represent a pixel position, W may represent the width of the image, and H may represent the height of the image. org may represent an original image, and input may represent a 'preprocessed image' to which image encoding will be applied. R may represent a matrix that performs a rotation transform, and $\theta$ may represent a rotation angle.

Equation 1 represents left/right symmetry transform (mirror), and Equation 2 represents up/down symmetry transform (flip). Equation 4 may represent 90-degree rotation transform ($\theta$=90), 180-degree rotation transform ($\theta$=180), and 270-degree rotation transform ($\theta$=270). Equation 5 may represent left/right symmetry transform and 90-degree rotation transform ($\theta$=90), left/right symmetry transform and -90-degree rotation transform ($\theta$=-90). Equation 6 may represent up/down symmetry transform and 90-degree rotation transform ($\theta$=90), up/down symmetry transform and -90-degree rotation transform ($\theta$=-90).

For example, when applying left/right symmetry transform and 90-degree rotation transform in CTU units, the upper part of the original CTU moves to the left, and the left part moves upward. Therefore, all reference sample information of the original CTU may be utilized.

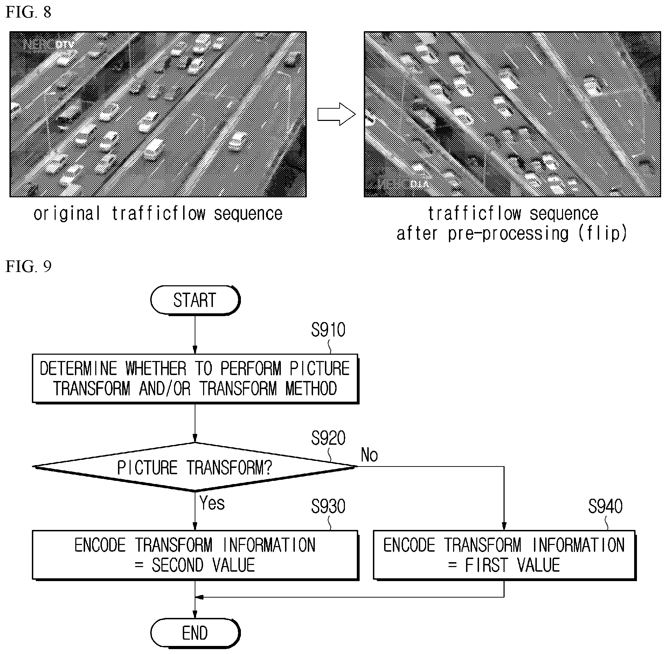

The image encoding apparatus 100 may select an optimal transform method through RDO (rate distortion optimization) or appropriate image analysis. For example, as illustrated in FIG. 8, when encoding is performed after applying flip image pre-processing to the trafficflow image, a compression efficiency improvement of Y -5.45%, Cb -6.16%, Cr -7.43% may be achieved.

According to embodiments, when the width and height of an image are changed due to pre-processing, the changed width and height may be used for encoding and decoding. For example, when an input image of 3840x2160 is rotated 90 degrees, the width and height of the rotated image become 2160 and 3840. In this case, the changed width and height (3840x2160 -> 2160x3840) may be used for encoding and decoding. However, when pre-processing is performed in CU units, if a non-square block (e.g., 4x16) is rotated 90 degrees, the width and height thereof changes and thus application may be impossible. Therefore, when pre-processing is performed in CU units, the method of using the changed width and height may not be applied.

Transform information representing a transform applied in pre-processing among candidate transform or candidate transforms may be binarized as shown in Tables 1 to 5.

[Table 1]

| Transform method | binarization |
|---|---|
| Input image transform off | 000 |
| Left/right symmetry transform (mirror) | 001 |
| Up/down symmetry transform (flip) | 010 |
| 90-degree rotation | 011 |
| 180-degree rotation | 100 |
| 270-degree rotation | 101 |
| Left/right symmetry and 90-degree rotation | 110 |
| Up/down symmetry and 90-degre rotation | 111 |

[Table 2]

| Transform method | binarization |
|---|---|
| Input image transform off | 00 |
| Left/right symmetry transform (mirror) | 01 |
| Up/down symmetry transform (flip) | 10 |
| 180-degree rotation | 11 |

[Table 3]

| Transform method | binarization |
|---|---|
| Input image transform off | 0 |
| Up/down symmetry transform (flip) | 10 |
| 180-degree rotation | 11 |

[Table 4]

| Transform method | binarization |
|---|---|
| Input image transform off | 0 |
| Left/right symmetry transform (mirror) | 1 |

[Table 5]

| Transform method | binarization |
|---|---|
| Input image transform off | 0 |
| Up/down symmetry transform (flip) | 1 |

Transform information may be a single syntax element that indicates whether a transform is applied and a candidate transform applied to the image.

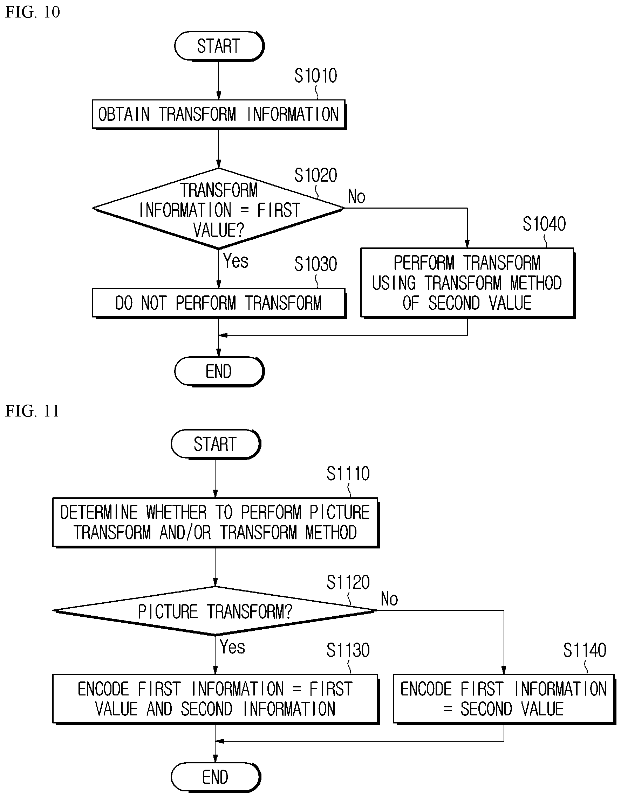

FIG. 9 is a flowchart illustrating an image encoding method using a single syntax element, and FIG. 10 is a flowchart illustrating an image decoding method using a single syntax element.

Referring to FIG. 9, the image encoding apparatus 100 may determine whether to perform a picture transform, and determine a transform method (applied candidate transform) (S910) if picture transform is performed. The image encoding apparatus 100 may encode transform information as a second value (S930) if picture transform is applied (S920), and may encode transform information as a first value if picture transform is not applied (S920). Here, the first value of the transform information indicates that transform is not applied, and the second value of the transform information may indicate a candidate transform applied to the transform of the image among the candidate transforms.

Referring to FIG. 10, the image decoding apparatus 200 may obtain transform information from a bitstream (S1010) and determine the value of the transform information (S1020). The image decoding apparatus 200 may not perform a transform (S1030) if the value of the transform information is a first value, and may perform a transform based on a candidate transform indicated by the second value (S1040) if the value of the transform information is a second value.

According to embodiments, the transform information may include first information indicating whether a transform is applied and second information indicating a candidate transform to be applied. A first value of the first information may indicate that a transform is applied, and a second value of the first information may indicate that a transform is not applied.

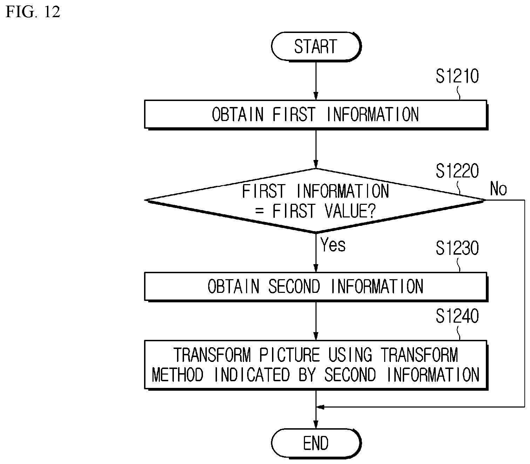

FIG. 11 is a flowchart illustrating an image encoding method using first information and second information, and FIG. 12 is a flowchart illustrating an image decoding method using first information and second information.

Referring to FIG. 11, the image encoding apparatus 100 may determine whether to perform a picture transform and determine a transform method (applied candidate transform) (S1110) if the picture transform is performed. If the picture transform is applied (S1120), the image encoding apparatus 100 may encode first information as a first value and encode second information (S1130). In contrast, if the picture transform is not applied (S1120), the image encoding apparatus 100 may encode first information as a second value (S1140), in which case the second information may not be encoded.

Referring to FIG. 12, the image decoding apparatus 200 may obtain first information from a bitstream (S1210) and determine the value of the first information (S1220). If the value of the first information is a second value, the image decoding apparatus 200 may not perform a transform and may not decode the second information. In contrast, if the value of the first information is a first value, the image decoding apparatus 200 may obtain second information from the bitstream (S1230) and transform the image based on the candidate transform indicated by the second information (S1240).

Meanwhile, the transform information may be signaled via HLS (high-level syntax). Examples of transform information signaled via the SPS level are shown in Tables 6 to 8.

[Table 6]

| seq_parameter_set_rbsp( ) { | Descriptor |
|---|---|
| ... | |
| **sps_seq_pre_processing_flag** | u(1) |
| ... | |

[Table 7]

| seq_parameter_set_rbsp( ) { | Descriptor |
|---|---|
| ... | |
| **sps_seq_pre_processing_id** | u(x) |
| ... | |

[Table 8]

| seq_parameter_set_rbsp( ) { | Descriptor |
|---|---|
| ... | |
| **sps_seq_pre_processing_flag** | u(1) |
| **if(sps_seq_pre_processing_flag)** | |
| **sps_seq_pre_processing_id** | u(x) |
| ... | |

sps_seq_pre_processing_flag in Table 6 indicates transform information when one pre-processing method is used, and sps_seq_pre_processing_id in Table 7 indicates transform information when multiple pre-processing methods are used. sps_seq_pre_processing_flag in Table 8 indicates the first information, and sps_seq_pre_processing_id in Table 8 indicates the second information.

When using the pre-processing method binarization of Tables 1 to 3, the syntax structure of Table 7 or Table 8 may be used. x of u(x) may be variably determined depending on the amount of information of the pre-processing, and for example, when using the pre-processing method binarization of Table 1, x may be determined to be 3.

Examples of transform information signaled via the PPS level are shown in Tables 9 to 11.

[Table 9]

| pic_parameter_set_rbsp( ) { | Descriptor |
|---|---|
| ... | |
| **pps_seq_pre_processing_flag** | u(1) |
| ... | |

[Table 10]

| pic_parameter_set_rbsp( ) { | Descriptor |
|---|---|
| ... | |
| **pps_seq_pre_processing_id** | u(x) |
| ... | |

[Table 11]

| pic_parameter_set_rbsp ( ) { | Descriptor |
|---|---|
| ... | |
| **pps_seq_pre_processing_flag** | u(1) |
| if(**pps_seq_pre_processing_flag**) | |
| **pps_seq_pre_processing_id** | u(x) |
| ... | |

The pps_seq_pre_processing_flag in Table 9 indicates transform information when one pre-processing method is used, and the pps_seq_pre_processing_id in Table 10 indicates transform information when multiple pre-processing methods are used. The pps_seq_pre_processing_flag in Table 11 indicates the first information, and the pps_seq_pre_processing_id in Table 11 indicates the second information.

When using the pre-processing method binarization of Tables 4 to 5, the syntax structure of Table 9 may be used. When using the pre-processing method binarization of Tables 1 to 3, the syntax structure of Table 10 or Table 11 may be used. x of u(x) may be variably determined according to the amount of information of the pre-processing, and for example, when using the pre-processing method binarization of Table 1, x may be determined to be 3.

Examples of transform information signaled via the PH levels are shown in Tables 12 to 14.

[Table 12]

| picture_header_structure ( ) { | Descriptor |
|---|---|
| ... | |
| **ph_seq_pre_processing_flag** | u(1) |
| ... | |

[Table 13]

| picture_header_structure( ) { | Descriptor |
|---|---|

(continued)

| | |
|---|---|
| ... | |
| **ph_seq_pre_processing_id** | u(x) |
| ... | |

[Table 14]

| picture_header_structure ( ) { | Descriptor |
|---|---|
| ... | |
| **ph_seq_pre_processing_flag** | u(1) |
| if(**ph_seq_pre_processing_flag**) | |
| **ph_seq_pre_processing_id** | u(x) |
| ... | |

The ph_seq_pre_processing_flag in Table 12 indicates transform information when one pre-processing method is used, and the ph_seq_pre_processing_id in Table 13 indicates transform information when multiple pre-processing methods are used. The ph_seq_pre_processing_flag in Table 14 indicates the first information, and the ph_seq_pre_processing_id in Table 14 indicates the second information.

When using the pre-processing method binarization of Tables 4 to 5, the syntax structure of Table 12 may be used. When using the pre-processing method binarization of Tables 1 to 3, the syntax structure of Table 13 or Table 14 may be used. x of u(x) may be variably determined according to the amount of information of the pre-processing, and for example, when using the pre-processing method binarization of Table 1, x may be determined to be 3.

Examples of transform information signaled via the SH level are shown in Tables 15 to 17.

[Table 15]

| slice_header ( ) { | Descriptor |
|---|---|
| ... | |
| **sh_seq_pre_processing_flag** | u(1) |
| ... | |

[Table 16]

| slice_header ( ) { | Descriptor |
|---|---|
| ... | |
| **sh_seq_pre_processing_id** | u(x) |
| ... | |

[Table 17]

| slice_header ( ) { | Descriptor |
|---|---|
| ... | |
| **sh_seq_pre_processing_flag** | u(1) |
| if(**sh_seq_pre_processing_flag**) | |
| **sh_seq_pre_processing_id** | u(x) |
| ... | |

sh_seq_pre_processing_flag in Table 15 indicates transform information when one pre-processing method is used, and sh_seq_pre_processing_id in Table 16 indicates transform information when multiple pre-processing methods are used. sh_seq_pre_processing_flag in Table 17 indicates first information, and sh_seq_pre_processing_id in Table 17 indicates second information.

When using the pre-processing method binarization of Tables 4 to 5, the syntax structure of Table 15 may be used. When using the pre-processing method binarization of Tables 1 to 3, the syntax structure of Table 16 or Table 17 may be used. x of u(x) may be variably determined according to the amount of information of the pre-processing, and for example, when using the pre-processing method binarization of Table 1, x may be determined to be 3.

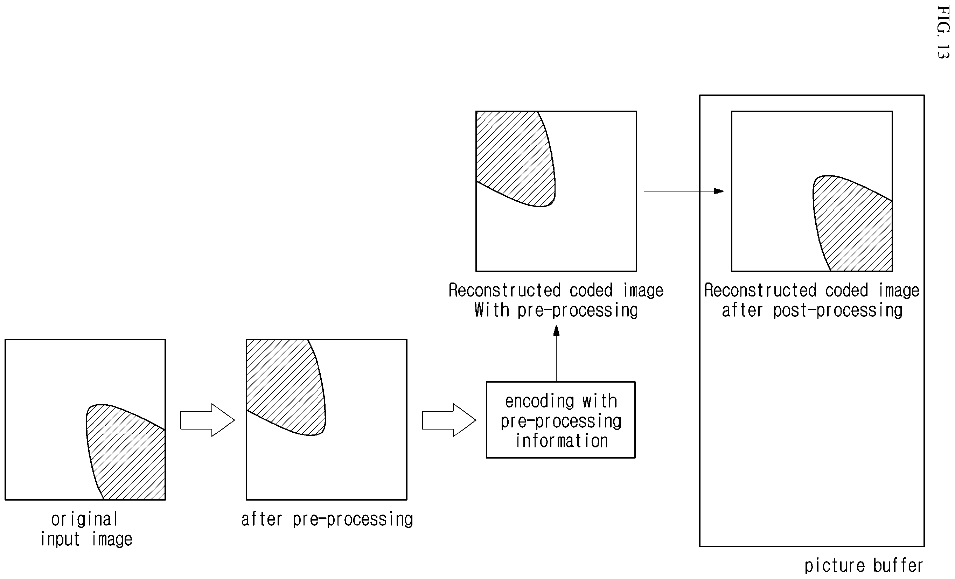

Meanwhile, since the encoded or decoded image is stored in a picture buffer for inter prediction, a post-processing method shown in FIG. 13 may be required to perform the process of inter prediction in the same manner as before. Referring to FIG. 13, the reconstructed picture may be stored in the picture buffer after post-processing.

In the present disclosure, when the pre-processing method is performed in units of slices, tiles, and subpictures, the following methods may be applied to store the image, to which pre-processing has been applied, in the picture buffer.

- After performing the transform through post-processing of the reconstructed image, it is stored in the picture buffer. In this case, P/B type slice/tile/subpicture processing may be the same as the existing method. That is, the method proposed in this embodiment may be applied only to I type slice/tile/subpicture processing.
- The reconstructed image is stored in the picture buffer with pre-processing applied. In this case, post-processing, i.e. image reconstruction work, may be added when processing P/B type slice/tile/subpicture.

## Embodiment 2

Embodiment 2 relates to a method of signaling first information indicating whether a transform is applied and second information indicating an applied candidate transform through different levels.

The first level, which is the level at which the first information is signaled, may be a higher level than the second level, which is the level at which the second information is signaled.

In the case of using one pre-processing method, the first information (sps_seq_pre_processing_flag) may be signaled through the SPS level, and the second information (ph_seq_pre_processing_flag) may be signaled through the PH level, as shown in Table 18. The second information may be signaled when the first information indicates that the transform is applied.

[Table 18]

| picture_header_structure ( ) { | Descriptor |
|---|---|
| ... | |
| if (**sps_seq_pre_processing_flag**) | |
| **ph_seq_pre_processing_flag** | u(1) |
| ... | |

When multiple pre-processing methods are used, the first information (sps_seq_pre_processing_flag) may be signaled through the SPS level, and the second information (ph_seq_pre_processing_id) may be signaled through the PH level, as shown in Table 19. The second information may be signaled when the first information indicates that the transform is applied.

[Table 19]

| picture_header_structure ( ) { | Descriptor |
|---|---|
| ... | |
| if (**sps_seq_pre_processing_flag**) | |
| **ph_seq_pre_processing_id** | u(x) |
| ... | |

When using one pre-processing method, the first information (sps_seq_pre_processing_flag) may be signaled through the SPS level, and the second information (sh_seq_pre_processing_flag) may be signaled through the SH level, as shown in Table 20. The second information may be signaled when the first information indicates that the transform is applied.

[Table 20]

| slice_header ( ) { | Descriptor |
|---|---|
| ... | |
| **if (sps_seq_pre_processing_flag)** | |
| **sh_seq_pre_processing_flag** | u(1) |
| ... | |

When multiple pre-processing methods are used, the first information (sps_seq_pre_processing_flag) may be signaled through the SPS level, and the second information (sh_seq_pre_processing_id) may be signaled through the SH level, as shown in Table 21. The second information may be signaled when the first information indicates that the transform is applied.

[Table 21]

| slice_header ( ) { | Descriptor |
|---|---|
| ... | |
| **if (sps_seq_pre_processing_flag)** | |
| **sh_seq_pre_processing_id** | u(x) |
| ... | |

**Embodiment 3**

Embodiment 3 relates to a method of selecting an optimal candidate transform from among multiple candidate transforms (pre-processing methods).

By identifying the edge distribution of an image or block, a candidate transform that may transform an image in a direction in which vertical diagonal edges (the direction before horizontal mode and the direction after vertical mode in intra prediction) may be reduced may be selected. For example, if there are many edges in the vertical diagonal direction, an up/down symmetry transform or a left/right symmetry transform may be selected. Analysis of the edge distribution may be performed by applying various edge detection filters (e.g., Roberts, Sobel, Prewitt, Kirsch, Robinson, Marr-Hildreth, LoG, Canny) and algorithms to the original image or the original block.

For example, when using the Robinson edge feature extraction method, the distribution of eight edges in the first slice of the image may be as shown in Table 22.

[Table 22]

| % | E | NE | N | NW | W | SW | S | SE | non-edge |
|---|---|---|---|---|---|---|---|---|---|
| **Tango** | 9.4 | 11.1 | 10.1 | 14.0 | 9.8 | 11.1 | 8.5 | 10.8 | 15.3 |
| **Foodmarket4** | 9.4 | 11.6 | 9.5 | 11.3 | 8.4 | 8.9 | 7.2 | 8.6 | 25.0 |
| **Campfire** | 7.9 | 6.8 | 5.2 | 7.7 | 7.5 | 7.6 | 5.6 | 8.2 | 43.7 |
| **Catrobot** | 10.4 | 8.1 | 6.5 | 9.8 | 10.7 | 8.1 | 6.0 | 8.2 | 32.1 |
| **DaylightRoad2** | 9.8 | 9.5 | 12.5 | 10.4 | 9.7 | 10.2 | 12.1 | 10.2 | 15.7 |
| **Parkrunning3** | 11.1 | 12.8 | 9.6 | 13.1 | 10.2 | 12.5 | 9.3 | 13.0 | 8.4 |
| **MarketPlace** | 9.2 | 12.3 | 12.5 | 12.6 | 9.1 | 12.1 | 11.5 | 11.2 | 9.5 |
| **RitualDance** | 7.5 | 7.0 | 5.8 | 8.8 | 8.6 | 5.8 | 4.2 | *5.1* | 47.1 |
| **Cactus** | 7.6 | 6.7 | 7.1 | 7.2 | 7.4 | 6.9 | 7.2 | 5.8 | 44.1 |
| **BasketballDrive** | 3.2 | 3.7 | 11.3 | 2.9 | 2.8 | 3.8 | 10.8 | 2.8 | 58.8 |
| **BQTerrace** | 16.4 | 5.3 | 6.8 | 6.2 | 12.9 | 5.0 | 6.9 | 6.0 | 34.6 |
| **BasketballDrill** | 5.9 | 14.1 | 4.7 | 4.7 | 5.0 | 14.2 | 4.3 | 4.8 | 42.3 |
| **BQMall** | 13.5 | 6.7 | 7.8 | 5.8 | 12.2 | 5.6 | 6.7 | 5.8 | 35.9 |

(continued)

| % | E | NE | N | NW | W | SW | S | SE | non-edge |
|---|---|----|---|----|---|----|---|----|----------|
| **PartyScene** | 11.4 | 11.2 | 10.7 | 9.8 | 10.6 | 10.6 | 10.5 | 8.7 | 16.3 |
| **RaceHorses** | 9.2 | 9.9 | 7.0 | 10.2 | 8.9 | 8.9 | 5.8 | 8.3 | 31.9 |
| **BasketballPass** | 8.0 | 6.7 | 12.7 | 5.2 | 7.4 | 7.0 | 12.5 | 4.8 | 35.8 |
| **BQSquare** | 7.1 | 7.5 | 7.8 | 8.3 | 6.6 | 7.0 | 8.6 | 7.1 | 40.2 |
| **BlowingBubbles** | 14.5 | 11.8 | 7.3 | 9.3 | 11.3 | 9.2 | 7.8 | 10.2 | 18.5 |
| **RaceHorses** | 11.2 | 11.9 | 8.3 | 12.0 | 10.1 | 10.0 | 6.6 | 9.6 | 20.3 |
| **FourPeople** | 7.0 | 4.7 | 6.4 | 4.9 | 6.9 | 4.4 | 5.3 | 4.1 | 56.3 |
| **Johnny** | 5.2 | 4.1 | 2.5 | 3.5 | 5.6 | 2.9 | 2.4 | 2.7 | 71.0 |
| **KristenAndSara** | 6.3 | 3.9 | 2.8 | 3.7 | 5.8 | 3.4 | 2.4 | 3.1 | 68.6 |
| **BasketballDrillText** | 5.5 | 12.8 | 5.6 | 4.5 | 4.8 | 13.0 | 5.3 | 4.6 | 44.0 |
| **ArenaOfValor** | 4.6 | 6.1 | 7.4 | 6.7 | 4.5 | 6.1 | 7.7 | 6.3 | 50.5 |
| **SlideEditing** | 6.5 | 4.3 | 12.2 | 3.9 | 6.8 | 3.7 | 11.5 | 3.9 | 47.3 |
| **SlideShow** | 4.8 | 2.9 | 10.0 | 2.7 | 4.2 | 2.5 | 11.0 | 2.1 | 59.9 |

In Table 22, E, NE, N, NW, W, SW, S, and SE represent eight edge directions, and a non-edge is a flat area without an edge, and is selected when the eight directional feature values in each pixel do not exceed a specific threshold. The numbers represent the distribution of each edge feature in the entire image, and the unit is %. More precisely, in order to extract the edge feature of the image, noise removal may be performed by performing smoothing filtering using a Gaussian filter, etc., on the original image.

From the results in Table 22, it can be seen that if the sum of NE and SW is less than the sum of NW and SE, then performing up/down symmetry (flip) pre-processing and then encoding can achieve a performance improvement of Y -0.17%.

Other methods for selecting the optimal candidate transform may be as follows.

- A candidate transform that transforms the image in a direction where the complexity may increase in the top-left of the image (or block) is selected. For example, if the right side of the image is more complex than the left side, a left/right symmetry transform may be selected. The complexity of the image may be calculated through algorithms such as comparing high-frequency components by image (or block) area, object detection, etc.
- An optimal transform method may be selected through simple RDO for the image (or block). For simple RDO, methods such as reducing the image size through downsampling of the original image, performing simple RDO (e.g., 1st RDO step for selecting intra prediction mode candidates), turning off complex encoding tools, or limiting the CTU block depth may be used.
- The optimal candidate transform for a current block may be selected through the transform information of the left and top blocks of the current block. For example, the transform information applied to the left and top blocks of the current block may be applied to the current block in the same manner.

## Embodiment 4

Embodiment 4 relates to a method of selecting an optimal candidate transform from among multiple candidate transforms (pre-processing methods).

By identifying the edge distribution of an image or block, a candidate transform that may transform an image in a direction in which vertical diagonal edges (the direction before horizontal mode and the direction after vertical mode in intra prediction) may be reduced may be selected. For example, if there are many edges in the vertical diagonal direction, an up/down symmetry transform or a left/right symmetry transform may be selected. Analysis of the edge distribution may be performed by applying various edge detection filters (e.g., Roberts, Sobel, Prewitt, Kirsch, Robinson, Marr-Hildreth, LoG, Canny) and algorithms to the original image or the original block.

In addition, for the sophisticated analysis of the original image, the accuracy of edge detection can be improved by applying a smoothing filter such as LPF (low-pass filter) to the original image to reduce noise and then using an edge detection filter.

For example, when using the Robinson edge feature extraction method in Table 23, the distribution of eight edges in the first slice of the image may be as shown in Table 24.

[Table 23]

| E (east) | NE (northeast) | N (north) | NW (northwest) |
|---|---|---|---|
| $\begin{matrix} -1 & 0 & 1 \\ -2 & 0 & 2 \\ -1 & 0 & 1 \end{matrix}$ | $\begin{matrix} 0 & 1 & 2 \\ -1 & 0 & 1 \\ -2 & -1 & 0 \end{matrix}$ | $\begin{matrix} 1 & 2 & 1 \\ 0 & 0 & 0 \\ -1 & -2 & -1 \end{matrix}$ | $\begin{matrix} 2 & 1 & 0 \\ 1 & 0 & -1 \\ 0 & -1 & -2 \end{matrix}$ |
| W (west) | SW (southwest) | S (south) | SE (southeast) |
| $\begin{matrix} 1 & 0 & -1 \\ 2 & 0 & -2 \\ 1 & 0 & -1 \end{matrix}$ | $\begin{matrix} 0 & -1 & -2 \\ 1 & 0 & -1 \\ 2 & 1 & 0 \end{matrix}$ | $\begin{matrix} -1 & -2 & -1 \\ 0 & 0 & 0 \\ 1 & 2 & 1 \end{matrix}$ | $\begin{matrix} -2 & -1 & 0 \\ -1 & 0 & 1 \\ 0 & 1 & 2 \end{matrix}$ |

[Table 24]

| % | E | NE | N | NW | W | SW | S | SE | non-edge |
|---|---|---|---|---|---|---|---|---|---|
| Tango | 15.8 | 10.6 | 15.1 | 12.7 | 14.6 | 10.2 | 12.4 | 8.2 | 0.2 |
| Foodmarket4 | 18.0 | 11.3 | 15.6 | 10.9 | 13.9 | 8.8 | 11.6 | 6.3 | 3.5 |
| Campfire | 13.2 | 7.1 | 8.1 | 7.7 | 11.0 | 7.5 | 8.4 | 6.5 | 30.6 |
| Catrobot | 20.4 | 9.7 | 12.3 | 10.9 | 17.2 | 9.5 | 10.9 | 6.9 | 2.1 |
| DaylightRoad2 | 15.2 | 9.7 | 16.7 | 10.1 | 13.3 | 9.7 | 15.8 | 8.2 | 1.2 |
| Parkrunning3 | 16.6 | 11.0 | 13.4 | 11.3 | 14.1 | 10.7 | 12.8 | 9.8 | 0.3 |
| MarketPlace | 13.7 | 10.8 | 16.8 | 10.7 | 12.5 | 10.3 | 15.1 | 8.5 | 1.8 |
| RitualDance | 14.7 | 7.7 | 10.7 | 9.5 | 13.8 | 6.2 | 7.3 | 4.1 | 26.0 |
| Cactus | 19.4 | 9.8 | 13.7 | 10.2 | 14.6 | 9.6 | 12.4 | 5.3 | 5.0 |
| BasketballDrive | 15.0 | 9.4 | 20.0 | 7.2 | 9.6 | 9.7 | 18.7 | 3.4 | 7.1 |
| BQTerrace | 26.3 | 8.3 | 11.8 | 8.5 | 16.8 | 7.0 | 11.2 | 5.5 | 4.6 |
| BasketballDrill | 19.8 | 16.0 | 9.5 | 7.3 | 12.9 | 16.5 | 9.6 | 4.9 | 3.5 |
| BQMall | 24.5 | 8.8 | 12.8 | 8.4 | 17.4 | 6.6 | 10.2 | 4.9 | 6.4 |
| PartyScene | 18.0 | 11.0 | 14.3 | 9.8 | 14.5 | 10.1 | 13.5 | 7.3 | 1.5 |
| RaceHorses | 20.8 | 11.0 | 12.8 | 11.2 | 15.3 | 9.3 | 10.1 | 6.5 | 3.0 |
| BasketballPass | 15.5 | 8.9 | 19.6 | 7.5 | 12.5 | 9.8 | 18.9 | 4.6 | 2.6 |
| BQSquare | 15.6 | 10.4 | 15.2 | 9.3 | 11.9 | 10.6 | 16.0 | 5.9 | 5.0 |
| BlowingBubbles | 23.5 | 11.4 | 11.0 | 9.5 | 15.9 | 8.7 | 11.4 | 7.8 | 0.9 |
| RaceHorses | 20.6 | 11.5 | 13.1 | 11.4 | 15.4 | 9.5 | 10.2 | 7.2 | 1.1 |
| FourPeople | 20.2 | 7.6 | 12.1 | 8.6 | 14.6 | 7.8 | 10.7 | 3.9 | 14.7 |
| Johnny | 22.6 | 8.8 | 8.6 | 9.0 | 13.1 | 6.2 | 6.3 | 3.3 | 22.1 |
| KristenAndSara | 23.5 | 7.8 | 8.8 | 8.1 | 13.3 | 6.3 | 6.6 | 3.2 | 22.4 |
| BasketballDrillText | 20.5 | 14.6 | 9.8 | 7.4 | 12.4 | 15.0 | 9.9 | 4.6 | 5.8 |
| ArenaOfValor | 15.1 | 9.9 | 14.9 | 9.4 | 10.4 | 10.2 | 15.2 | 5.7 | 9.2 |
| SlideEditing | 20.5 | 9.6 | 13.3 | 3.7 | 7.6 | *5.1* | 12.4 | 2.6 | 25.1 |
| SlideShow | 10.1 | 7.5 | 15.7 | 4.3 | 7.1 | 4.9 | 12.7 | 1.7 | 36.1 |

When using the Robinson edge feature extraction method, eight directional 3x3 filters in Table 23 are applied to each pixel of the original image. Then, the direction of the filter with the largest value of the eight filtering results may be called the edge direction of each pixel. For example, if the W filter value is the largest when eight filters are applied to a pixel, the pixel may be said to have a west edge direction. Also, if the values obtained by applying eight filters are similar or all small, the pixel may be said to have a non-edge direction. Here, a specific value (threshold) for determining a non-edge may be determined experimentally. For example, if the values of the results of applying eight filters to a pixel are all smaller than a specific value (threshold) that is determined in advance, the pixel may be said to have a non-edge.

In Table 24, E, NE, N, NW, W, SW, S, and SE represent eight edge directions, and a non-edge is a flat area without an edge, and is selected when the eight directional feature values in each pixel do not exceed a specific threshold. The numbers represent the distribution of each edge feature in the entire image, and the unit is %.

Through the results in Table 24, if the sum of NE and SW is less than the sum of NW and SE, and then encoding is performed after performing up/down symmetry (flip) pre-processing, the results in Table 25 may be obtained.

[Table 25]

|  | All Intra Main 10 | | | | |
|---|---|---|---|---|---|
|  | Over ECM-6.0 | | | | |
|  | Y | U | V | EncT | DecT |
| Class A1 | -0.25% | -0.31% | -0.29% | 99% | 97% |
| Class A2 | -0.25% | -0.28% | -0.27% | 100% | 98% |
| Class B | -0.32% | -0.73% | -0.95% | 99% | 97% |
| Class C | -0.01% | 0.02% | -0.03% | 100% | 98% |
| Class E | 0.01% | 0.04% | 0.02% | 100% | 97% |
| **Overall** | -0.17% | -0.29% | -0.36% | 100% | 97% |
| Class D | -0.05% | -0.18% | -0.16% | 100% | 102% |
| Class F | -0.11% | -0.21% | 0.07% | 100% | 96% |
| Class TGM | -0.55% | -0.40% | -0.48% | 100% | 100% |

The results in Table 25 used the Robinson edge feature extraction method, and after applying a 3x3 8 filter, a specific value (threshold) of 10 was used. That is, after applying 8 filters to a pixel, if all values were less than 10, the pixel was determined to be a non-edge pixel.

Other methods of selecting the best candidate transform may be as follows:

- A candidate transform that transforms the image in a direction where the complexity may increase in the top-left of the image (or block) is selected. For example, if the right side of the image is more complex than the left side, a left/right symmetry transform may be selected. The complexity of the image may be calculated through algorithms such as comparing high-frequency components by image (or block) area, object detection, etc.
- An optimal transform method may be selected through simple RDO for the image (or block). For simple RDO, methods such as reducing the image size through downsampling of the original image, performing simple RDO (e.g., 1st RDO step for selecting intra prediction mode candidates), turning off complex encoding tools, or limiting the CTU block depth may be used.
- The optimal candidate transform for a current block may be selected through the transform information of the left and top blocks of the current block. For example, the transform information applied to the left and top blocks of the current block may be applied to the current block in the same manner.

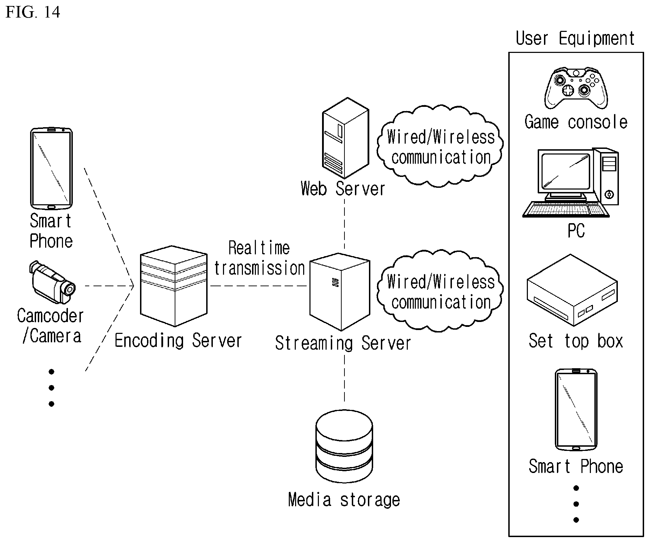

FIG. 14 is a view showing a content streaming system, to which an embodiment of the present disclosure is applicable.

As shown in FIG. 14, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

**Industrial Applicability**

The embodiments of the present disclosure may be used to encode or decode an image.

**Claims**

1. An image decoding method performed by an image decoding apparatus, the image decoding method comprising:

   reconstructing a picture from a bitstream; and
   transforming the reconstructed picture based on any one of at least one candidate transform,
   wherein the at least one candidate transform is a rotation transform or symmetry transform for the picture.

2. The image decoding method of claim 1, wherein the transform is performed based on transform information obtained from the bitstream.

3. The image decoding method of claim 2, wherein a first value of the transform information indicates that the transform is not applied and a second value of the transform information indicates any one of the at least one candidate transform.

4. The image decoding method of claim 2,

   wherein the transform information includes first information indicating whether the transform is applied and second information indicating any one of the at least one candidate transform, and
   wherein the second information is included in the transform information based on the first information indicating that the transform is applied.

5. The image decoding method of claim 4,

   wherein the first information is obtained from a first level of the bitstream,
   wherein the second information is obtained from a second level of the bitstream, and
   wherein the first level is a higher level than the second level.

6. The image decoding method of claim 1, wherein the transform is applied to any one of a subpicture, slice, tile, coding tree unit or coding unit of the picture.

7. An image encoding method performed by an image encoding apparatus, the image encoding method comprising:

   transforming a picture based on any one of at least one candidate transform; and

encoding the transformed picture in a bitstream,
wherein the at least one candidate transform is a rotation transform or symmetry transform for the picture.

8. A method of transmitting a bitstream generated by an image encoding method, the image encoding method comprising:

transforming a picture based on any one of at least one candidate transform; and
encoding the transformed picture in a bitstream,
wherein the at least one candidate transform is a rotation transform or symmetry transform for the picture.

FIG. 1

FIG. 2

FIG. 3

FIG. 4

Frame

Raster scan order

FIG. 5

original
input image

after preprocessing

encoding with
pre-processing
information

after preprocessing

reconstructed
image

decoding with
pre-processing
information

FIG. 6

```
                              ┌─────────────┐
                              │    START    │
                              └──────┬──────┘
                                     │              S610
                     ┌───────────────▼───────────────┐
                     │         OBTAIN PICTURE         │
                     └───────────────┬───────────────┘
                                     │              S620
                     ┌───────────────▼───────────────┐
                     │ TRANSFORM PICTURE (PRE-PROCESSING) │
                     └───────────────┬───────────────┘
                                     │              S630
                     ┌───────────────▼───────────────┐
                     │ ENCODE PICTURE (ENCODING PROCESS) │
                     └───────────────┬───────────────┘
                                     │
                              ┌──────▼──────┐
                              │     END     │
                              └─────────────┘
```

FIG. 7

```
                              ┌─────────────┐
                              │    START    │
                              └──────┬──────┘
                                     │              S710
                     ┌───────────────▼───────────────┐
                     │        Decoding process        │
                     └───────────────┬───────────────┘
                                     │              S720
                     ┌───────────────▼───────────────┐
                     │       RECONSTRUCT PICTURE      │
                     └───────────────┬───────────────┘
                                     │              S730
                     ┌───────────────▼───────────────┐
                     │ TRANSFORM PICTURE (POST-PROCESSING) │
                     └───────────────┬───────────────┘
                                     │              S740
                     ┌───────────────▼───────────────┐
                     │ OBTAIN FINAL RECONSTRUCTED PICTURE │
                     └───────────────┬───────────────┘
                                     │
                              ┌──────▼──────┐
                              │     END     │
                              └─────────────┘
```

FIG. 8

original trafficflow sequence

trafficflow sequence
after pre-processing (flip)

FIG. 9

```
                        START

                                              S910
   DETERMINE WHETHER TO PERFORM PICTURE
    TRANSFORM AND/OR TRANSFORM METHOD

                                      S920
                                              No
          PICTURE TRANSFORM?

            Yes              S930                              S940
   ENCODE TRANSFORM INFORMATION      ENCODE TRANSFORM INFORMATION
        = SECOND VALUE                    = FIRST VALUE

                        END
```

FIG. 10

```
                    ┌─────────┐
                    │  START  │
                    └────┬────┘
                         │        S1010
                         ▼
        ┌────────────────────────────────┐
        │  OBTAIN TRANSFORM INFORMATION  │
        └────────────────┬───────────────┘
                         │              S1020
                         ▼
               ╱─────────────────╲         No
              ╱     TRANSFORM      ╲──────────────┐
              ╲ INFORMATION = FIRST ╱              │
               ╲     VALUE?        ╱               │            S1040
                ╲─────────────────╱                ▼
                     │ Yes    S1030    ┌─────────────────────────┐
                     ▼                 │  PERFORM TRANSFORM       │
        ┌────────────────────────┐     │  USING TRANSFORM METHOD  │
        │ DO NOT PERFORM TRANSFORM│     │  OF SECOND VALUE         │
        └───────────┬────────────┘     └────────────┬────────────┘
                    │◄───────────────────────────────┘
                    ▼
               ┌─────────┐
               │   END   │
               └─────────┘
```

FIG. 11

```
                    ┌─────────┐
                    │  START  │
                    └────┬────┘
                         │        S1110
                         ▼
        ┌────────────────────────────────────────┐
        │ DETERMINE WHETHER TO PERFORM PICTURE    │
        │ TRANSFORM AND/OR TRANSFORM METHOD       │
        └────────────────┬───────────────────────┘
                         │              S1120
                         ▼
               ╱─────────────────────╲      No
              ╱   PICTURE TRANSFORM?   ╲──────────────┐
               ╲─────────────────────╱                │
                     │ Yes    S1130                    ▼          S1140
                     ▼                      ┌───────────────────────┐
        ┌────────────────────────────┐      │ ENCODE FIRST INFORMATION│
        │ ENCODE FIRST INFORMATION =  │      │ = SECOND VALUE          │
        │ FIRST VALUE AND SECOND      │      └───────────┬───────────┘
        │ INFORMATION                 │                  │
        └─────────────┬──────────────┘                  │
                      │◄─────────────────────────────────┘
                      ▼
                 ┌─────────┐
                 │   END   │
                 └─────────┘
```

FIG. 12

FIG. 13

FIG. 14

<table>
<tr><td colspan="2" align="center">INTERNATIONAL SEARCH REPORT</td><td colspan="2">International application No.<br>**PCT/KR2023/009552**</td></tr>
</table>

**A. CLASSIFICATION OF SUBJECT MATTER**

**H04N 19/60**(2014.01)i; **H04N 19/184**(2014.01)i; **H04N 19/20**(2014.01)i; **H04N 19/129**(2014.01)i; **H04N 19/70**(2014.01)i

According to International Patent Classification (IPC) or to both national classification and IPC

**B. FIELDS SEARCHED**

Minimum documentation searched (classification system followed by classification symbols)

H04N 19/60(2014.01); G06K 9/36(2006.01); G06T 7/10(2017.01); H04N 19/105(2014.01); H04N 19/136(2014.01); H04N 19/172(2014.01); H04N 19/176(2014.01); H04N 5/232(2006.01); H04N 7/26(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 비트스트림(bitstream), 복원(reconstruct), 회전(rotate), 변환(transform), 레벨(level), 후보(candidate)

**C. DOCUMENTS CONSIDERED TO BE RELEVANT**

| Category* | Citation of document, with indication, where appropriate, of the relevant passages | Relevant to claim No. |
|---|---|---|
| X | KR 10-2022-0029780 A (INTEL CORPORATION) 08 March 2022 (2022-03-08)<br>See paragraphs [0006], [0011], [0019]-[0023] and [0050]; claims 1-5; and figure 1. | 1-8 |
| X | US 2019-0028714 A1 (GOOGLE LLC) 24 January 2019 (2019-01-24)<br>See paragraphs [0017], [0021], [0032]-[0033], [0050], [0055] and [0072]-[0074]; claims 7-8; and figures 3 and 9. | 1-2,6-8 |
| X | US 2012-0230594 A1 (BOYCE, Jill et al.) 13 September 2012 (2012-09-13)<br>See paragraphs [0040]-[0044] and [0078]-[0093]; claim 1; and figures 1 and 4-5. | 1-2,6-8 |
| A | KR 10-2018-0039879 A (INHA UNIVERSITY RESEARCH AND BUSINESS FOUNDATION) 19 April 2018 (2018-04-19)<br>See claims 1-5. | 1-8 |
| A | JP 2020-088611 A (CANON INC.) 04 June 2020 (2020-06-04)<br>See claims 1-9. | 1-8 |

☐ Further documents are listed in the continuation of Box C.     ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 October 2023** | **12 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="3" align="center">INTERNATIONAL SEARCH REPORT<br>Information on patent family members</td><td colspan="2">International application No.<br><br>**PCT/KR2023/009552**</td></tr>
</table>

| Patent document cited in search report | | Publication date (day/month/year) | Patent family member(s) | | Publication date (day/month/year) |
|---|---|---|---|---|---|
| KR 10-2022-0029780 | A | 08 March 2022 | CN 112702525 | A | 23 April 2021 |
| | | | CN 112702525 | B | 06 May 2022 |
| | | | EP 3826302 | A1 | 26 May 2021 |
| | | | KR 10-2021-0000331 | A | 04 January 2021 |
| | | | KR 10-2568731 | B1 | 18 August 2023 |
| | | | US 11699211 | B2 | 11 July 2023 |
| | | | US 2022-0237737 | A1 | 28 July 2022 |
| | | | WO 2018-093840 | A1 | 24 May 2018 |
| US 2019-0028714 | A1 | 24 January 2019 | US 10382767 | B2 | 13 August 2019 |
| | | | WO 2019-018011 | A1 | 24 January 2019 |
| US 2012-0230594 | A1 | 13 September 2012 | CN 103416002 | A | 27 November 2013 |
| | | | CN 103416002 | B | 01 April 2015 |
| | | | EP 2684294 | A1 | 15 January 2014 |
| | | | JP 2014-511647 | A | 15 May 2014 |
| | | | JP 6026443 | B2 | 16 November 2016 |
| | | | US 10027970 | B2 | 17 July 2018 |
| | | | US 2017-0324971 | A1 | 09 November 2017 |
| | | | WO 2012-121802 | A1 | 13 September 2012 |
| KR 10-2018-0039879 | A | 19 April 2018 | None | | |
| JP 2020-088611 | A | 04 June 2020 | JP 7299690 | B2 | 28 June 2023 |

Form PCT/ISA/210 (patent family annex) (July 2022)